# EUROPÄISCHE PATENTANMELDUNG

(11) **EP 4 265 088 A1**
(43) Veröffentlichungstag der Anmeldung: **25.10.2023**
(21) Anmeldenummer: 23401012.2
(22) Anmeldetag: 03.04.2023
(51) Int. Cl.: A01B 39/18

(54) **BODENBEARBEITUNGSVORRICHTUNG FÜR LANDWIRTSCHAFTLICHE ZWECKE UND VERFAHREN ZUR LANDWIRTSCHAFTLICHEN BODENBEARBEITUNG**

(30) Priorität: 11.04.2022 DE 102022108719
(71) Anmelder: Amazonen-Werke H. Dreyer SE & Co. KG, 49205 Hasbergen (DE)
(72) Erfinder: Mahler, Tom, 04249 Leipzig (DE); Hinners, Patrick, 49078 Osnabrück (DE); Lenz, Tino, 04275 Leipzig (DE)

(57) **Zusammenfassung**

Die Erfindung betrifft eine Bodenbearbeitungsvorrichtung (10) für landwirtschaftliche Zwecke, insbesondere zur Bodenbearbeitung während der Fortbewegung über einen Bodenbereich, mit wenigstens einem Bodenbearbeitungswerkzeug, insbesondere wenigstens einem Hackrad (14) beziehungsweise Fingerrad, zur Bearbeitung des Bodens beziehungsweise Bodenbereich bei der Fortbewegung, insbesondere zum Entfernen unerwünschter Pflanzen im Bereich der Nutzpflanzen (18). Vorzugsweise ist die Ausrichtung des Bodenbearbeitungswerkzeugs einstellbar, insbesondere relativ zu Nutzpflanzen (18) beziehungsweise Nutzpflanzenreihen (19). Die Erfindung zeichnet sich dadurch aus, dass wenigstens ein Freiheitsgrad des Bodenbearbeitungswerkzeugs aktorisch einstellbar ist. Des Weiteren ist ein entsprechendes Verfahren zur landwirtschaftlichen Bodenbearbeitung, vorzugsweise mit einer Bodenbearbeitungsvorrichtung für landwirtschaftliche Zwecke, vorgesehen, das sich dadurch auszeichnet, dass wenigstens ein Freiheitsgrad des Bodenbearbeitungswerkzeugs aktorisch eingestellt wird.

## Beschreibung

Die Erfindung betrifft eine Bodenbearbeitungsvorrichtung für landwirtschaftliche Zwecke gemäß dem Oberbegriff des Anspruchs 1. Des Weiteren betrifft die Erfindung ein Verfahren zur landwirtschaftlichen Bodenbearbeitung gemäß dem Oberbegriff des Anspruchs 12.

Verschiedene Bodenbearbeitungsgeräte für eine Vielzahl von Einsatzzwecken im Zusammenhang mit der Unkrautbeseitigung sind bekannt. Um beispielsweise Pflanzenreihen maschinell von Unkraut zu befreien, dienen insbesondere sogenannte Hackräder oder Fingerräder. Dabei handelt es sich um Räder mit umlaufend angeordneten Zinken, die den Boden seitlich neben den und teilweise auch innerhalb der Pflanzreihen bearbeiten.

Die Hackräder lockern dabei typischerweise die oberen Bodenschichten auf. Dabei werden unerwünschte Pflanzen in diesem Bereich ausgerissen. Da die Hackräder seitlich neben den definierten Pflanzreihen arbeiten sollen, werden die Nutzpflanzen geschont.

Wenn Hackräder selber direkt auf dem Boden ablaufen, ist deren Effektivität bei der Entfernung von Unkraut klein. Daher werden in der Regel parallel über den Untergrund ablaufende Antriebsräder verwendet, die jeweils ein Hackrad mittels einer schräg verlaufenden Achse antreiben. Hackräder und Antriebsräder können dabei nur für eine bestimmte Arbeitsgeschwindigkeit optimiert sein, da sie dazu aufeinander abgestimmte unterschiedliche Durchmesser aufweisen müssen.

Nachteilig an den bekannten Hackrädern ist allerdings, dass diese nicht in allen Einsatzbereichen zuverlässig arbeiten. Einerseits kommt es häufig zu unerwünschten Beschädigungen von Nutzpflanzen und andererseits werden die unerwünschten Pflanzen beziehungsweise Beikräuter nicht immer zuverlässig entfernt. Dies ist beispielsweise in besonderem Maße bei Kurvenfahrten oder Wendemanövern der Fall. Auch variiert die Arbeitsqualität aufgrund der Kopplung an die ablaufenden Antriebsräder erheblich mit der Geschwindigkeit der Bewegung über den Untergrund.

Es ist daher eine Aufgabe der Erfindung, diese Nachteile des Standes der Technik zu beseitigen. Insbesondere sollen die Nutzpflanzen besser geschont werden. Gleichzeitig sollen die unerwünschten Pflanzen zuverlässiger entfernt werden. Ein Arbeiten in verschiedenen Geschwindigkeitsbereichen soll ermöglicht werden.

Diese Aufgabe wird gelöst durch eine Bodenbearbeitungsvorrichtung für landwirtschaftliche Zwecke mit den Merkmalen des Anspruchs 1. Die Bodenbearbeitungsvorrichtung ist insbesondere zur Bodenbearbeitung während der Fortbewegung über einen Bodenbereich vorgesehen. Wenigstens ein Bodenbearbeitungswerkzeug beziehungsweise Bodeneingriffswerkzeug, insbesondere wenigstens einem Hackrad beziehungsweise Fingerrad, ist dabei zur Bearbeitung des Bodens beziehungsweise Bodenbereich bei der Fortbewegung vorgesehen. Dies dient insbesondere zum Entfernen unerwünschter Pflanzen im Bereich der Nutzpflanzen, wobei vorzugsweise die Ausrichtung des Bodenbearbeitungswerkzeugs einstellbar ist, insbesondere relativ zu Nutzpflanzen beziehungsweise Nutzpflanzenreihen. Die Bodenbearbeitungsvorrichtung zeichnet sich dadurch aus, dass wenigstens ein Freiheitsgrad des Bodenbearbeitungswerkzeugs aktorisch einstellbar ist. Dies bedeutet, dass eine gezielte Einstellung des wenigstens einen Bodenbearbeitungswerkzeugs vorgesehen ist. Damit kann die Arbeitsweise des Bodenbearbeitungswerkzeugs relativ zu den Nutzpflanzen beziehungsweise den zu entfernenden unerwünschten Pflanzen eingestellt werden. Dies gilt insbesondere im Hinblick auf eine verbesserte Entfernung unerwünschter Pflanzen. Eine aktorische Einstellbarkeit bedeutet insbesondere, dass eine aktive Einstellung möglich ist. Dies steht insbesondere im Gegensatz zu bekannten, beispielsweise lediglich mitlaufenden und/oder fest, insbesondere manuell eingestellten Bodenbearbeitungswerkzeugen. Die aktorische Einstellung erfolgt insbesondere mittels wenigstens eines Aktors. Durch die aktorische Einstellung kann die Arbeitsweise laufend an das erwünschte Arbeitsergebnis angepasst werden. Das Bedienpersonal der Bodenbearbeitungsvorrichtung muss nicht absteigen, um manuelle Einstellungen vorzunehmen. Die Einstellungen werden vorzugsweise maschinell vorgenommen.

Bevorzugt ist wenigstens ein motorischer Antrieb für die wenigstens eine aktorische Einstellung vorgesehen. Weiter vorzugsweise ist für jede der aktorischen Einstellungen des wenigstens einen Freiheitsgrades vorgesehen. Insbesondere sind separate Antriebe vorgesehen. Es werden vorzugsweise motorische Antriebe verwendet. Insbesondere handelt es sich um elektromotorische und/oder pneumatische und/oder hydraulische Antriebe, gegebenenfalls auch Kombinationen und/oder andere motorische Antriebe. Damit wird auf einfache Weise eine aktorische Einstellung erreicht.

Wenigstens eine Ausrichtung des Bodenbearbeitungswerkzeugs ist insbesondere als Freiheitsgrad einstellbar. Als Ausrichtung ist insbesondere die Stellung des Bodenbearbeitungswerkzeugs relativ zu den Nutzpflanzen und/oder der Nutzpflanzenreihe anzusehen. Es kann als Ausrichtung aber entsprechend auch die Stellung relativ zur Bodenbearbeitungsvorrichtung gesehen werden. Auf diese Weise lassen sich verschiedene Arbeitsbereiche beziehungsweise Parameterbereiche für die Arbeitsweise der Bodenbearbeitungsvorrichtung definieren.

Die Ausrichtung des wenigstens einen Bodenbearbeitungswerkzeugs ist insbesondere relativ zur Fortbewegungsrichtung und/oder relativ zum Bodenbereich und/oder relativ zu den Nutzpflanzen beziehungsweise unerwünschten Pflanzen einstellbar. Vorzugsweise kann das Bodenbearbeitungswerkzeug quer zur Fahrtrichtung und/oder senkrecht beziehungsweise unter einem Winkel von 90 Grad zur Fahrtrichtung eingestellt werden. Auch Einstellung unter beliebigen spitzen und stumpfen Winkeln zur Fahrtrichtung sind denkbar, insbesondere unter Berücksichtigung der Fahrrichtung. Das Bodenbearbeitungswerkzeug kann vorzugsweise in die Nutzpflanzenreihe hinein bewegt werden oder aus dieser heraus, auch wechselnd. Damit wird eine flexible Reaktion auf die tatsächlichen Gegebenheiten ermöglicht.

Vorzugsweise sind/ist bei der Bodenbearbeitungsvorrichtung der Neigungswinkel und/oder die Höheneinstellung beziehungsweise die Arbeitshöhe und/oder der Querabstand beziehungsweise der Reihenabstand beziehungsweise die Querrichtung einstellbar. Damit kann eine Anpassung an die konkrete Anordnung der Nutzpflanzen erfolgen.

Der Bewegungszustand des Bodenbearbeitungswerkzeugs, insbesondere Hackrads, ist bevorzugt als Freiheitsgrad einstellbar, insbesondere eine Rotationsbewegung. Vorzugsweise ist die Rotationsgeschwindigkeit, insbesondere einer Rotationsbewegung um eine Drehachse, einstellbar. Weiter vorzugsweise ist wenigstens ein Antrieb für das wenigstens eine Bodenbearbeitungswerkzeug vorgesehen. Durch Einstellung des Bewegungszustands kann das Bodenbearbeitungswerkzeug besonders zielgerichtet arbeiten.

Wenigstens eine Steuerungsvorrichtung ist vorzugsweise für die Einstellung des wenigstens einen Freiheitsgrades des Bodenbearbeitungswerkzeugs vorgesehen. Als Steuerungsvorrichtung kommt insbesondere eine elektronische und/oder computergestützte Steuerung in Betracht, wie beispielsweise eine Prozesssteuerung, ein Steuerungsmodul, ein Mobilgerät und/oder eine Cloudsteuerung, mit oder ohne Bedieneinheit. Auf diese Weise kann eine mehr oder weniger automatisierte Steuerung der Funktionen der Bodenbearbeitungsvorrichtung erreicht werden.

Insbesondere ist wenigstens eine vorzugsweise elektronische Beobachtungsvorrichtung für den Bodenbereich und/oder den Bewuchs beziehungsweise die Pflanzen und/oder das Bodenbearbeitungswerkzeug vorgesehen. Die Beobachtungseinrichtung kann der wenigstens einen Bodenbearbeitungsvorrichtung zugeordnet sein, insbesondere mehreren Bodenbearbeitungsvorrichtungen. Die Beobachtungseinrichtung dient insbesondere dazu, die Bodengegebenheiten und/oder die Pflanzen zu erfassen. Aus Daten der Beobachtungseinrichtung lassen sich Rückschlüsse für die Einstellung der Freiheitsgrade des Bodenbearbeitungswerkzeugs ziehen.

Zur Beobachtung ist vorzugsweise wenigstens ein Sensor vorgesehen. Bevorzugt dient der Sensor zur Beobachtung von Bodenbereichen. Als Sensor kann insbesondere wenigstens ein Ultraschallsensor und/oder Radarsensor und/oder optischer Sensor vorgesehen sein. Vorzugsweise kann wenigstens eine Kamera und/oder ein Kamerasystem und/oder ein Laserscanner als Sensor vorgesehen sein. Weiter vorzugsweise kann eine Bildauswertung eingerichtet sein. Verschiedene Sensortypen eigen sich für verschiedene Einsatzzwecke. Bildsensoren, insbesondere mit einer Bildauswertung, können dabei insbesondere eine breites Einsatzgebiet abdecken. Sie können viele Informationen über das Beobachtungsgebiet, insbesondere einen Bodenbereich, liefern.

Es ist vorzugsweise wenigstens eine Auswertungseinheit vorgesehen. Die Auswerteeinheit ist insbesondere mit dem wenigstens einen Sensor und/oder der Steuerungsvorrichtung gekoppelt. Die Auswerteeinheit dient bevorzugt zur Erkennung von Pflanzen und/oder zur Beobachtung des Bodenbereichs. Auf diese Weise lassen sich bevorzugt unerwünschte Pflanzen und Nutzpflanzen unterscheiden. So kann eine entsprechende Einstellung des Bodenbearbeitungswerkzeugs erfolgen. Insbesondere ist auf diese Weise eine gezielte Beseitigung unerwünschter Pflanzen zu erreichen.

Die eingangs geschilderte Aufgabe wird außerdem durch ein Verfahren zur landwirtschaftlichen Bodenbearbeitung mit den Maßnahmen des Anspruch 12 gelöst. Das Verfahren ist vorzugsweise mit einer Bodenbearbeitungsvorrichtung für landwirtschaftliche Zwecke ausführbar, wie sie vorzugsweise oben beschrieben ist. Die Bodenbearbeitungsvorrichtung dient insbesondere zur Bodenbearbeitung während der Fortbewegung über einen Bodenbereich. Der Boden beziehungsweise Bodenbereich wird vorzugsweise mit wenigstens einem Bodenbearbeitungswerkzeug beziehungsweise Bodeneingriffswerkzeug, insbesondere wenigstens einem Hackrad beziehungsweise Fingerrad, bei der Fortbewegung bearbeitet. Dabei werden insbesondere unerwünschte Pflanzen entfernt. Vorzugsweise wird die Ausrichtung des Bodenbearbeitungswerkzeugs eingestellt. Dies dient dazu, den Boden oder Bodenbereich zu bearbeiten und unerwünschte Pflanzen zu entfernen. Das Verfahren zeichnet sich dadurch aus, dass wenigstens ein Freiheitsgrad des Bodenbearbeitungswerkzeugs aktorisch eingestellt wird. Das Verfahren ist dazu vorgesehen, das Bodenbearbeitungswerkzeug aktorisch einzustellen, also insbesondere mittels wenigstens eines Aktors. Damit kann die Arbeitsweise des Bodenbearbeitungswerkzeugs relativ zu den Nutzpflanzen beziehungsweise den zu entfernenden unerwünschten Pflanzen eingestellt werden. Dies gilt insbesondere im Hinblick auf eine verbesserte Entfernung unerwünschter Pflanzen. Eine aktorische Einstellbarkeit bedeutet insbesondere, dass eine aktive Einstellung möglich wird. Dies steht insbesondere im Gegensatz zu den bekannten, beispielsweise lediglich mitlaufenden und/oder festen, insbesondere manuellen Einstellungen von Bodenbearbeitungswerkzeugen.

Mit dem Verfahren wird vorzugsweise der wenigstens eine Freiheitsgrad motorisch eingestellt. Weiter vorzugsweise erfolgt dies mittels wenigstens eines Antriebs, insbesondere eines elektromotorischen und/oder pneumatischen und/oder hydraulischen Antriebs. Zur aktorischen Einstellung sind verschiedene motorische Aktoren geeignet. Damit wird eine vorzugsweise automatisierte Einstellung, beispielsweise durch die Bodenbearbeitungsvorrichtung ermöglicht, insbesondere ohne manuellen Eingriff.

Mittels des Verfahrens wird vorzugsweise die wenigstens eine Ausrichtung des Bodenbearbeitungswerkzeugs als Freiheitsgrad eingestellt. Hierzu dient insbesondere wenigstens eine Steuerungseinheit. Vorzugsweise werden/wird als Freiheitsgrad die Ausrichtung insbesondere relativ zur Fortbewegungsrichtung und/oder relativ zum Bodenbereich und/oder der Neigungswinkel und/oder die Arbeitshöhe beziehungsweise die Höheneinstellung und/oder der Querabstand beziehungsweise der Reihenabstand beziehungsweise die Querrichtung eingestellt. Durch eine aktorische Einstellung der Ausrichtung kann insbesondere laufend eine optimale Arbeitsweise des Bodenbearbeitungswerkzeugs erreicht werden. Weiter vorzugsweise werden/wird das wenigstens eine Bodenbearbeitungswerkzeug, vorzugsweise die Hackräder aktorisch vom Boden abgehoben. Auf diese Weise erfolgt insbesondere ein Schutz der Nutzpflanzen bei Kurvenfahrten.

Insbesondere werden/wird der Bodenbereich und/oder der Bewuchs beziehungsweise die Pflanzen beobachtet. Vorzugsweise werden/wird wenigstens ein Sensor verwendet. Insbesondere werden/wird es sich bei dem Sensor um eine Kamera und/oder ein Ultraschallsensor und/oder ein Radarsensor und/oder ein Laserscanner verwendet. Weiter vorzugsweise wird wenigstens eine Auswertungseinheit verwendet. Durch Beobachtung des Bodenbereichs und/der des Bewuchses, insbesondere der Pflanzen, können beispielsweise aktuelle Einstellungen vorgenommen werden. Auch können Planungen für zukünftige Einstellungen vorgenommen werden.

Ein bevorzugtes Ausführungsbeispiel der Erfindung wird im Folgenden anhand der Figuren der Zeichnung beschrieben. In dieser zeigt:
- Fig. 1: eine perspektivische Ansicht einer Bodenbearbeitungsvorrichtung mit mehreren Bodenbearbeitungswerkzeugen an einem Zugfahrzeug,
- Fig. 2: ein Detailansicht der Bodenbearbeitungsvorrichtung mit einer ersten Einstellung des Neigungswinkels der Bodenbearbeitungswerkzeuge,
- Fig. 3: ein Detailansicht der Bodenbearbeitungsvorrichtung mit einer zweiten Einstellung des Neigungswinkels der Bodenbearbeitungswerkzeuge,
- Fig. 4: ein Detailansicht der Bodenbearbeitungsvorrichtung mit einer Höhenverstellung der Bodenbearbeitungswerkzeuge, und
- Fig. 5: ein Detailansicht der Bodenbearbeitungsvorrichtung mit einer Verstellung des Querabstands der Bodenbearbeitungswerkzeuge.

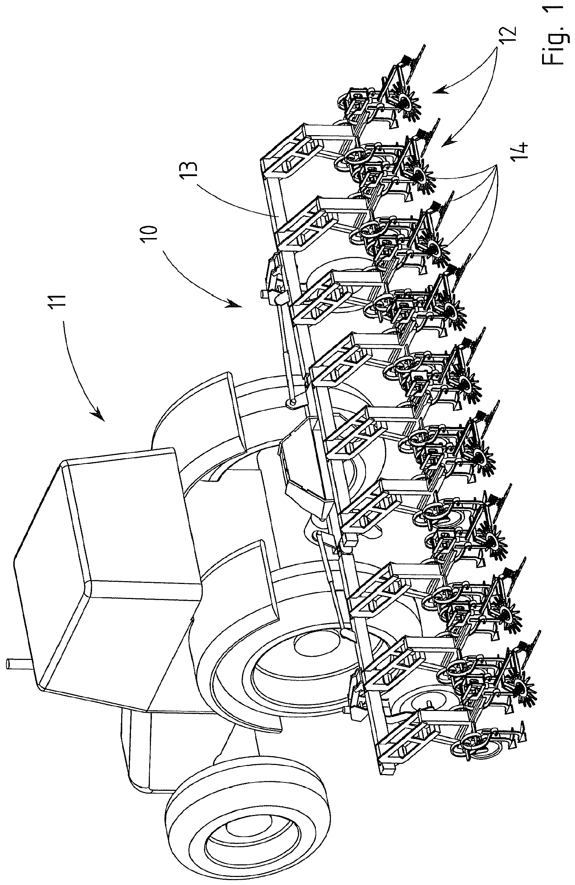

In der Fig. 1 ist eine Bodenbearbeitungsvorrichtung 10 in einer perspektivischen Ansicht dargestellt.

Die Bodenbearbeitungsvorrichtung 10 ist als angehängtes landwirtschaftliches Arbeitsgerät ausgebildet. In diesem Fall ist die Bodenbearbeitungsvorrichtung 10 an einem Zugfahrzeug 11 angehängt. Das Zugfahrzeug 11 transportiert die Bodenbearbeitungsvorrichtung 10 über einen Untergrund, wie insbesondere einen Boden oder Bodenbereich. Damit kann das Bodenbearbeitungsvorrichtung 10 beispielsweise eine Ackerfläche bearbeiten.

Die Bodenbearbeitungsvorrichtung 10 weist hier mehrere Bodenbearbeitungsaggregate 12 auf. Diese sind an einem Rahmen 13 der Bodenbearbeitungsvorrichtung 10 angeordnet. Die Bodenbearbeitungsaggregate 12 sind am Rahmen 13 befestigt. Sie können dabei seitlich entlang des Rahmens 13 verschieblich beziehungsweise verstellbar angeordnet sein.

Geräte, wie die Bodenbearbeitungsvorrichtung 10, dienen insbesondere der Bearbeitung des Bodens beziehungsweise der darauf wachsenden Pflanzen. Dazu sind Bodenbearbeitungswerkzeuge vorgesehen. Diese können auch als Bodeneingriffswerkzeuge bezeichnet werden. Die Bodenbearbeitungswerkzeuge sind jeweils den Bodenbearbeitungsaggregaten 12 zugeordnet.

In diesem Fall handelt es sich bei den Bodenbearbeitungswerkzeugen um sogenannte Hackräder 14 oder Fingerräder. Diese Hackräder 14 dienen dazu, den oberen Bodenbereich zu bearbeiten. Dazu weisen die Hackräder 14 jeweils eine Drehachse 15 auf. Die Hackräder 14 rotieren um ihre jeweilige Drehachse 15.

Im gezeigten Ausführungsbeispiel ist jedem Hackrad 14 ein Gehäuse 16 zugeordnet, das auch als Blackbox bezeichnet werden kann. Die Drehachse 15 ist hier insbesondere in beziehungsweise an dem jeweiligen Gehäuse 16 gelagert.

Um eine gezielte Bearbeitung des Bodens beziehungsweise eine Entfernung unerwünschter Pflanzen zu erreichen, sind die Hackräder 14 angetrieben. Dazu kann jedes der Hackräder 14 insbesondere jeweils mit einem separaten Antrieb 17 ausgestattet sein. Es lassen sich auch gemeinsame Antriebe für mehrere der Hackräder 14 vorsehen.

Mit den Hackrädern 14 lassen sich die oberen Bodenschichten auflockern. Durch die Hackräder 14 lassen sich auf diese Weise unerwünschte Pflanzen entfernen, wie insbesondere Beikräuter.

Im Stand der Technik ist es bekannt, eine Einstellung verschiedener Freiheitsgrade der Bodenbearbeitungsvorrichtung 10 und insbesondere der Bodenbearbeitungswerkzeuge auf manuelle Weise vorzunehmen. Damit kann eine Einstellung für die Bearbeitung des jeweiligen Bodenbereiches festgelegt werden. Um die Einstellungen anzupassen, sind Unterbrechungen im Arbeitsgang vorzunehmen.

Die Erfindung zeichnet sich insbesondere dadurch aus, eine optimale Einstellung des wenigstens einen Freiheitsgrades für die Arbeitsweise der Bodenbearbeitungswerkzeuge auf aktorische Weise vorzunehmen. In diesem Fall sollen die Hackräder 14 entsprechend eingestellt werden. Es sollen die Nutzpflanzen 18 geschont und gleichzeitig die unerwünschten Pflanzen beseitigt werden.

Eine aktorische Einstellung des wenigstens eines Freiheitsgrades erfolgt insbesondere motorisch. Es lassen sich hierzu beispielsweise elektromotorische, hydraulische oder auch pneumatische Antriebe nutzen.

Wenigstens ein hier nicht gezeigter Sensor ist dafür vorgesehen, den zu bearbeitenden Bodenbereich sowie die Nutzpflanzen 18 zu beobachten. Beispielsweise kann mit einer Kamera, wie beispielsweise einer digitalen Kamera, wie insbesondere einer Zeilenkamera und/oder einer 3D-Kamera, eine bildgebende Überwachung erfolgen. Mittels Abstandssensoren, wie beispielsweise Licht-, Ultraschall- oder Radarsensoren.

Die Sensordaten werden ausgewertet. Dazu dient insbesondere eine Steuerungseinrichtung, beispielsweise ein Prozessrechner oder eine Computersteuerung. Es kann sich auch um eine dezentrale Computersteuerung handeln. Diese kann insbesondere über ein Netzwerk, wie das Internet, mit der Bodenbearbeitungsvorrichtung 10 verbunden sein.

Anhand der ermittelten Daten lassen sich dann die Einstellungen der jeweiligen Bodenbearbeitungswerkzeuge entsprechend durch aktorische Einstellung vornehmen. Dazu ist wenigstens ein motorischer Antrieb vorgesehen. Es kann sich beispielsweise um elektromotorische, hydraulische, pneumatische und/oder andere motorische Antriebe handeln.

Auch während der Bodenbearbeitung können die Freiheitsgrade der Bodenbearbeitungswerkzeuge, wie beispielsweise der Hackräder 14, nachgestellt werden. Dies kann beispielsweise aufgrund einer fortgesetzten, insbesondere auch kontinuierlichen Beobachtung und Auswertung erfolgen. Die Steuerung kann dann während der Fahrt weiter die aktuelle Einstellung überwachen. Dies erfolgt anhand von Messdaten. Die Steuerung kann dann die Einstellungen anpassen. So können die Freiheitsgrade des wenigstens einen Bodenbearbeitungswerkzeugs, wie des wenigstens einen Hackrads 14 oder Fingerrads, laufend angepasst werden.

Indem die Einstellung aktorisch vorgenommen wird, kann die Arbeitsweise laufend an das erwünschte Arbeitsergebnis angepasst werden, ohne dass das Bedienpersonal absteigen muss, um manuelle Einstellungen vorzunehmen.

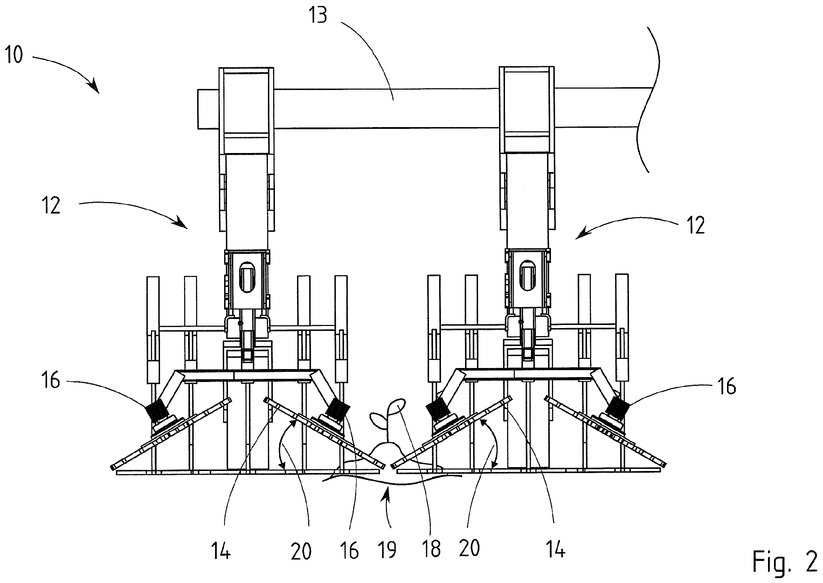

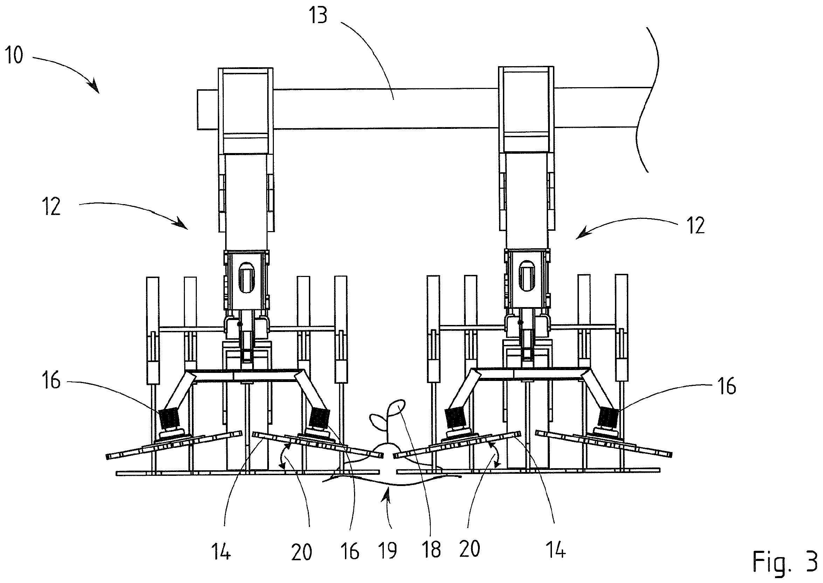

In den Fig. 2 und 3 sind Hackräder 14 mit unterschiedlichen Neigungswinkeln 20 zu sehen. In Fig. 2 ist ein steiler Neigungswinkel 20 der Hackräder 14 eingestellt. In Fig. 3 hingegen ist ein flacher Neigungswinkel 20 der Hackräder 14 eingestellt. Die Variation des eingestellten Neigungswinkels zwischen Fig. 2 und 3 erfolgt aktorisch. Je nach eingestelltem Neigungswinkel 20 variiert die Intensität der Bearbeitung. Die Bearbeitungsintensität ist somit aktorisch einstellbar.

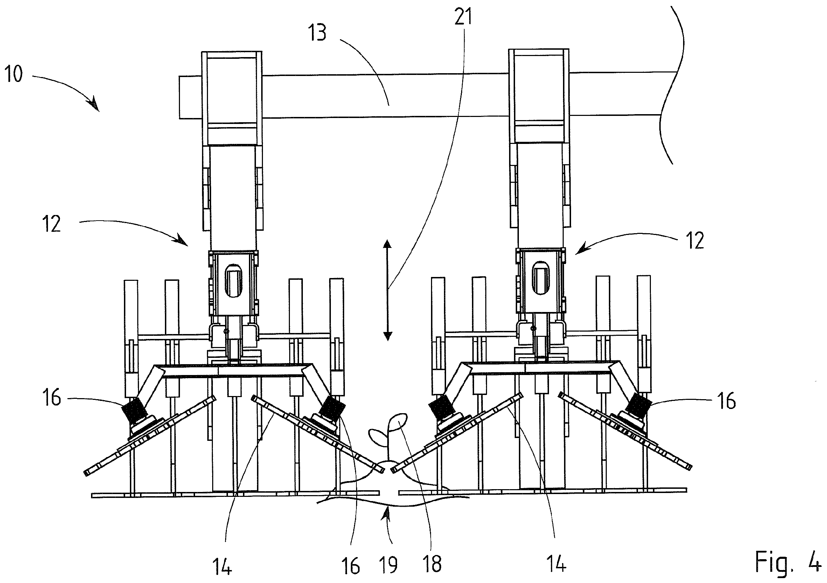

In Fig. 4 sind Hackräder 14 mit einer angepassten Höheneinstellung 21 zu sehen. Im Vergleich zu Fig. 2 sind die Hackräder 14 bei ansonsten gleichen Einstellungen hier höher über dem Boden angeordnet, so dass die Nutzpflanzen 18 weiter oben behandelt werden.

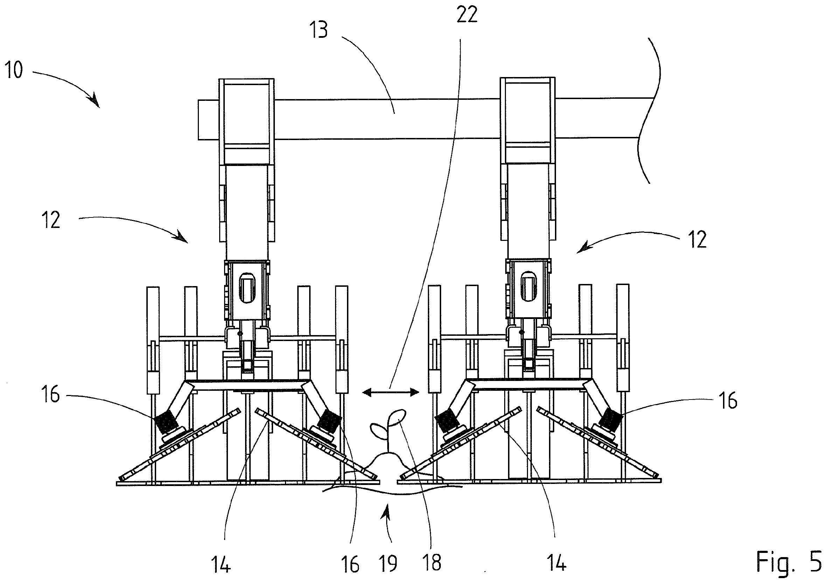

In Fig. 5 sind Hackräder 14 mit einem angepassten Querabstand 22 zu sehen. Im Vergleich zu Fig. 2 sind die Hackräder 14 bei ansonsten gleichen Einstellungen hier mit einem vergrößerten Querabstand 22 zur Pflanzreihe 19 eingestellt.

In vorteilhafter Weise lassen sich die verschiedenen aktorischen Einstellmöglichkeiten kombinieren, um jederzeit eine geeignete Bearbeitung zu gewährleisten. Es ist ebenso denkbar die Bodenbearbeitungsvorrichtung mit nur einer oder zwei der vorgestellten aktorischen Einstellmöglichkeiten bereitzustellen, um eine kostengünstige Herstellung zu erreichen.

Außerdem werden aufgrund der laufenden Überwachung des Bodenbereichs weitere Funktionen ermöglicht. Um beispielsweise Nutzpflanzen 19 beim Wendemanöver nicht zu beschädigen wurden bisher hierfür Schaltpunkte eingestellt. Die Sensorik kann nun den idealen Zeitpunkt zum Aushub der einzelnen Aggregate, insbesondere der Bodenbearbeitungswerkzeuge, bestimmen, vorzugsweise beim Einsatz von Hackrädern 14.

Die beschriebenen Merkmale und Ausführungsbeispiele der Erfindung lassen sich, soweit dies technisch sinnvoll ist, auch über die unmittelbar beschriebenen Merkmalskombinationen hinaus beliebig miteinander kombinieren.

### Bezugszeichenliste

- 10: Bodenbearbeitungsvorrichtung
- 11: Zugfahrzeug
- 12: Bodenbearbeitungsaggregat
- 13: Rahmen
- 14: Hackrad
- 15: Drehachse
- 16: Gehäuse
- 17: Antrieb
- 18: Nutzpflanze
- 19: Pflanzreihe
- 20: Neigungswinkel
- 21: Höheneinstellung
- 22: Querabstand

## Patentansprüche

1. Bodenbearbeitungsvorrichtung für landwirtschaftliche Zwecke, insbesondere zur Bodenbearbeitung während der Fortbewegung über einen Bodenbereich, mit wenigstens einem Bodenbearbeitungswerkzeug, insbesondere wenigstens einem Hackrad (14) beziehungsweise Fingerrad, zur Bearbeitung des Bodens beziehungsweise Bodenbereich bei der Fortbewegung, insbesondere zum Entfernen unerwünschter Pflanzen im Bereich der Nutzpflanzen (18), wobei vorzugsweise die Ausrichtung des Bodenbearbeitungswerkzeugs einstellbar ist, insbesondere relativ zu Nutzpflanzen (18) beziehungsweise Nutzpflanzenreihen (19), **dadurch gekennzeichnet, dass** wenigstens ein Freiheitsgrad des Bodenbearbeitungswerkzeugs aktorisch einstellbar ist.

2. Bodenbearbeitungsvorrichtung nach Anspruch 1, **dadurch gekennzeichnet, dass** wenigstens ein vorzugsweise motorischer Antrieb (17) für die wenigstens eine aktorische Einstellung, vorzugsweise für jede der aktorischen Einstellungen, des wenigstens einen Freiheitsgrades vorgesehen ist, insbesondere separate Antriebe (17), wobei insbesondere elektromotorische und/oder pneumatische und/oder hydraulische Antriebe vorgesehen sind.

3. Bodenbearbeitungsvorrichtung nach Anspruch 1 oder 2, **dadurch gekennzeichnet, dass** wenigstens eine Ausrichtung des Bodenbearbeitungswerkzeugs als Freiheitsgrad einstellbar ist.

4. Bodenbearbeitungsvorrichtung nach einem der vorhergehenden Ansprüche, **dadurch gekennzeichnet, dass** die Ausrichtung insbesondere relativ zur Fortbewegungsrichtung und/oder relativ zum Bodenbereich und/oder relativ zu den Nutzpflanzen (18) beziehungsweise unerwünschten Pflanzen einstellbar ist, insbesondere quer und/oder 90 Grad zur Fahrtrichtung und/oder rein und raus aus der Nutzpflanzenreihe (19).

5. Bodenbearbeitungsvorrichtung nach einem der vorhergehenden Ansprüche, **dadurch gekennzeichnet, dass** der Neigungswinkel (20) und/oder die Höheneinstellung (21) beziehungsweise die Arbeitshöhe und/oder der Querabstand (22) beziehungsweise der Reihenabstand beziehungsweise die Querrichtung einstellbar sind/ist.

6. Bodenbearbeitungsvorrichtung nach einem der vorhergehenden Ansprüche, **dadurch gekennzeichnet, dass** der Bewegungszustand des Bodenbearbeitungswerkzeugs, insbesondere Hackrads (14), als Freiheitsgrad einstellbar ist, vorzugsweise die Rotationsgeschwindigkeit, insbesondere einer Rotationsbewegung um eine Drehachse (15), wobei vorzugsweise wenigstens ein Antrieb für das wenigstens eine Bodenbearbeitungswerkzeug vorgesehen ist.

7. Bodenbearbeitungsvorrichtung nach einem der vorhergehenden Ansprüche, **dadurch gekennzeichnet, dass** wenigstens eine Steuerungsvorrichtung für die Einstellung des wenigstens einen Freiheitsgrades des Bodenbearbeitungswerkzeugs vorgesehen ist.

8. Bodenbearbeitungsvorrichtung nach einem der vorhergehenden Ansprüche, **dadurch gekennzeichnet, dass** wenigstens eine, vorzugsweise elektronische Beobachtungsvorrichtung für den Bodenbereich und/oder den Bewuchs beziehungsweise die Pflanzen und/oder das Bodenbearbeitungswerkzeug vorgesehen ist.

9. Bodenbearbeitungsvorrichtung nach einem der vorhergehenden Ansprüche, **dadurch gekennzeichnet, dass** zur Beobachtung wenigstens ein Sensor vorgesehen ist, insbesondere als Beobachtungsvorrichtung, wobei insbesondere wenigstens ein Ultraschallsensor und/oder Radarsensor und/oder optischer Sensor vorgesehen ist, vorzugsweise wenigstens eine Kamera und/oder ein Kamerasystem und/oder ein Laserscanner, weiter vorzugsweise mit Bildauswertung.

10. Bodenbearbeitungsvorrichtung nach einem der vorhergehenden Ansprüche, **dadurch gekennzeichnet, dass** wenigstens eine Auswertungseinheit vorgesehen ist, wobei die Auswerteeinheit insbesondere mit dem wenigstens einen Sensor und/oder der Steuerungsvorrichtung gekoppelt ist, zur Erkennung von Pflanzen und/oder zur Beobachtung des Bodenbereichs.

11. Bodenbearbeitungsvorrichtung nach einem der vorhergehenden Ansprüche, **dadurch gekennzeichnet, dass** als Freiheitsgrad das wenigstens eine Bodenbearbeitungswerkzeug, vorzugsweise die Hackräder (14), beispielsweise zum Schutz der Nutzpflanzen (18) bei Kurvenfahrten, aktorisch vom Boden abgehoben werden/wird.

12. Verfahren zur landwirtschaftlichen Bodenbearbeitung, vorzugsweise mit einer Bodenbearbeitungsvorrichtung für landwirtschaftliche Zwecke, insbesondere zur Bodenbearbeitung während der Fortbewegung über einen Bodenbereich, wobei der Boden beziehungsweise Bodenbereich vorzugsweise mit wenigstens einem Bodenbearbeitungswerkzeug, insbesondere wenigstens einem Hackrad (14) beziehungsweise Fingerrad, bei der Fortbewegung bearbeitet wird, insbesondere zum Entfernen unerwünschter Pflanzen, wobei vorzugsweise die Ausrichtung des Bodenbearbeitungswerkzeugs eingestellt wird, **dadurch gekennzeichnet, dass** wenigstens ein Freiheitsgrad des Bodenbearbeitungswerkzeugs aktorisch eingestellt wird.

13. Verfahren nach Anspruch 12, **dadurch gekennzeichnet, dass** der wenigstens eine Freiheitsgrad motorisch eingestellt wird, vorzugsweise mittels wenigstens eines Antriebs (17), insbesondere eines elektromotorischen und/oder pneumatischen und/oder hydraulischen Antriebs.

14. Verfahren nach Anspruch 12 oder 13, **dadurch gekennzeichnet, dass** die wenigstens eine Ausrichtung des Bodenbearbeitungswerkzeugs als Freiheitsgrad eingestellt wird, mit insbesondere wenigstens einer Steuerungseinheit, wobei vorzugsweise als Freiheitsgrad die Ausrichtung insbesondere relativ zur Fortbewegungsrichtung und/oder relativ zum Bodenbereich und/oder der Neigungswinkel (20) und/oder die Arbeitshöhe beziehungsweise Höheneinstellung (21) und/oder der Querabstand (22) beziehungsweise der Reihenabstand beziehungsweise die Querrichtung eingestellt werden/wird und/oder dass das wenigstens eine Bodenbearbeitungswerkzeug, vorzugsweise die Hackräder (14), vom Boden abgehoben werden/wird, insbesondere zum Schutz der Nutzpflanzen (18) bei Kurvenfahrten.

15. Verfahren nach einem der Ansprüche 12 bis 14, **dadurch gekennzeichnet, dass** der Bodenbereich und/oder der Bewuchs beziehungsweise die Pflanzen beobachtet werden/wird, wobei vorzugsweise wenigstens ein Sensor, wie insbesondere eine Kamera und/oder ein Ultraschallsensor und/oder ein Radarsensor und/oder ein Laserscanner verwendet werden/wird, vorzugsweise mit wenigstens einer Auswertungseinheit.
